(19) Europäisches Patentamt
European Patent Office
Office européen des brevets

(11) Veröffentlichungsnummer : **0 180 790**
**B1**

(12) # EUROPÄISCHE PATENTSCHRIFT

(45) Veröffentlichungstag der Patentschrift : **29.07.87**

(21) Anmeldenummer : **85112710.0**

(22) Anmeldetag : **08.10.85**

(51) Int. Cl.⁴ : **C 08 K 3/32**, C 08 K 9/10, C 08 L 75/04, C 08 J 9/00, C 09 K 21/04

(54) **Hydrolysestabiles Flammschutzmittel auf der Basis von Ammoniumpolyphosphat.**

(30) Priorität : **18.10.84 DE 3438096**
**10.08.85 DE 3528737**

(43) Veröffentlichungstag der Anmeldung : **14.05.86 Patentblatt 86/20**

(45) Bekanntmachung des Hinweises auf die Patenterteilung : **29.07.87 Patentblatt 87/31**

(84) Benannte Vertragsstaaten : **DE FR GB IT NL SE**

(56) Entgegenhaltungen :
**DE-A- 2 949 537**
**DE-A- 3 217 816**

(73) Patentinhaber : **HOECHST AKTIENGESELLSCHAFT**
**Postfach 80 03 20**
**D-6230 Frankfurt am Main 80 (DE)**

(72) Erfinder : **Staendeke, Horst, Dr.**
**Alte Honrather Strasse 22**
**D-5204 Lohmar (DE)**
Erfinder : **Michels, Eduard, Dr.**
**Neue Bohle 66**
**D-5040 Brühl (DE)**

**EP 0 180 790 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein hydrolysestabiles, mikroverkapseltes Flammschutzmittel auf der Basis von freifließendem, pulverförmigem Ammoniumpolyphosphat und ein Verfahren zu seiner Herstellung.

Es ist generell bekannt, Ammoniumpolyphosphate als Flammschutzmittel für Kunststoffe zu verwenden. Beispielsweise beschreibt die Deutsche Auslegeschrift 12 83 532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel

$$H_{(n-m)+2}(NH_4)_mP_nO_{3n+1}$$

in der n eine ganze Zahl mit einem über 10 liegenden Durchschnittswert ist, m eine ganze Zahl bis maximal n + 2 bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, daß sie nicht ausreichend wasserunlöslich sind und deshalb im Laufe der Zeit durch Witterungseinflüsse aus dem Kunststoff ausgewaschen werden. Wie aus Spalte 3 der DE-AS 12 83 532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 ml Wasser bei 25 °C bis zu 5 g des Ammoniumpolyphosphates gelöst werden, d. h. daß die löslichen Anteile des Ammoniumpolyphosphates bis zu 50 % der eingesetzten Menge betragen.

In den deutschen Offenlegungsschriften DE-OS 29 49 537 und DE-OS 30 05 252 werden Verfahren zur Herstellung von hydrolysestabilen, pulverförmigen Ammoniumpolyphosphaten durch Umhüllung mit Melamin/Formaldehyd-Harzen bzw. Phenol/Formaldehyd-Harzen beschrieben. In beiden Fällen wird durch diese Maßnahme die Wasserlöslichkeit im Vergleich zu unbeschichtetem Ammoniumpolyphosphat deutlich verringert.

Nachteilig bei der Verwendung als Flammschutzmittel ist jedoch, daß das Beschichtungsmaterial geringe Mengen an Formaldehyd freisetzt.

Schließlich wird in der DE-OS 32 17 816 die Herstellung von hydrolysestabilen, pulverförmigen Ammoniumpolyphosphaten durch Umhüllung mit gehärteten Epoxidharzen beschrieben. Allerdings ist der angestrebte Effekt der Verringerung der wasserlöslichen Anteile weniger ausgeprägt als bei den Melamin/Formaldehyd-Harzen.

Es bestand somit die Aufgabe, Mittel und Wege zur Verminderung der Löslichkeit von Ammoniumpolyphosphaten in Wasser zu finden, so daß die Gefahr des Auswaschens des Ammoniumpolyphosphates beim Einsatz als Flammschutzmittel in Kunststoffen sowie in Holz- oder Papierwerkstoffen durch Witterungseinflüsse möglichst weitgehend vermieden wird. Ferner soll sichergestellt sein, daß das Beschichtungsmaterial keine Schadstoffe freisetzt.

Es hat sich nunmehr gezeigt und war nicht vorhersehbar, daß der erfindungsgemäße Ersatz von Melamin- bzw. Phenolharzen durch Polyharnstoffe mit Vorteilen verbunden ist.

Somit betrifft die Erfindung ein Flammschutzmittel auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, welches dadurch gekennzeichnet ist, daß es aus

a) etwa 75 bis 99,5 Masse% Ammoniumpolyphosphat und

b) etwa 0,5 bis 25 Masse% eines Reaktionsproduktes aus einem Polyisocyanat und Wasser, wobei der Polyharnstoff die einzelnen Ammoniumpolyphosphatteilchen umhüllt, besteht. Das Ergebnis dieser Erfindung ist ein hydrolysestabiles, mikroverkapseltes Flammschutzmittel.

Das Mittel der Erfindung besitzt im allgemeinen eine mittlere Teilchengröße von etwa 0,01 bis 0,1 mm und der Kondensationsgrad n des Ammoniumpolyphosphates ist vorzugsweise eine ganze Zahl mit einem Durchschnittswert von 450 bis 800, bestimmt nach dem Endgruppen-Titrations-Verfahren von « van Wazer, Griffiter und McCullough », Anal. Chem. 26, Seite 1755 (1954).

Entsprechend einer weiteren bevorzugten Ausführungsform des erfindungsgemäßen Mittels beträgt der Anteil des Polyharnstoffes 2 bis etwa 15 Masse%.

Der Polyharnstoff ist ein Reaktionsprodukt, welches durch eine Polyaddition des durch die Reaktion des Polyisocyanates mit Wasser unter Kohlendioxid-Abspaltung gebildeten Polyamins mit Polyisocyanat entsteht. Der Begriff « Polyisocyanat » umfaßt alle handelsüblichen aromatischen oder aliphatischen Di- und Polyisocyanate sowie Prepolymere auf Basis von Polyurethan- oder Polycarbodiimid- oder Polyisocyanurat-modifizierten Polyisocyanaten, welche aus handelsüblichen aromatischen oder aliphatischen Di- und Polyisocyanaten durch partielle Umsetzung mit Polyhydroxiverbindungen, durch teilweise Carbodiimidisierung oder durch teilweise Trimerisierung hergestellt werden, und wie sie z. B. für die Herstellung von Polyurethan-, Polyisocyanurat- oder Polycarbodiimidschäumen Verwendung finden.

Das erfindungsgemäße Verfahren zur Herstellung dieses hydrolysestabilen, mikroverkapselten Flammschutzmittels ist dadurch gekennzeichnet, daß man eine Suspension, welche aus einem Verdünnungsmittel und aus freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus Wasser besteht, während 0,5 bis 5 Stunden unter Rühren auf Temperaturen zwischen 30 bis 200 °C hält und anschließend abkühlt, filtriert und das nunmehr mit einem Polyharnstoff mikroverkapselte Ammoniumpolyphosphat trocknet.

Im einzelnen besteht das Verfahren wahlweise darin, daß

a) man die Suspension aus Verdünnungsmittel und Ammoniumpolyphosphat vorlegt und dieser Suspension Lösungen des Polyisocyanates und anschließend des Wassers in dem Verdünnungsmittel langsam zugibt ;

b) in der allgemeinen Formel des Ammoniumpolyphosphates n eine ganze Zahl mit einem Durchschnittswert von 450 bis 800 ist ;

c) als Verdünnungsmittel nicht protonenaktive, mit Wasser mischbare Lösemittel bzw. Lösemittelgemische wie zum Beispiel aliphatische, aromatische und gemischtaliphatische/aromatische Ketone, vorzugsweise Aceton, eingesetzt werden ;

d) als Polyisocyanat handelsübliche aromatische oder aliphatische Di- und Polyisocyanate sowie Prepolymere auf Basis von Polyurethan- oder Polycarbodiimid- oder Polyisocyanurat-modifizierten Polyisocyanaten eingesetzt werden, wobei die Prepolymere aus handelsüblichen aromatischen oder aliphatischen Di- und Polyisocyanaten durch partielle Umsetzung mit Polyhydroxiverbindungen, durch teilweise Carbodiimidisierung oder durch teilweise Trimerisierung hergestellt werden.

e) als Polyisocyanat durch teilweise Carbodiimidisierung erhaltene, Polycarbodiimid-modifizierte Polyisocyanate, zum Beispiel Polycarbodiimid-modifiziertes 4,4'-Diphenylmethandiisocyanat, eingesetzt werden ;

f) als Reaktionspartner für die Polyisocyanate Wasser eingesetzt wird ;

g) in der Suspension ein Verhältnis von Ammoniumpolyphosphat : Verdünnungsmittel : Polyisocyanat : Wasser wie I 1,5-2,5 : 0,05-0,25 : 0,005-0,1, vorzugsweise wie 1 : 2 : 0,1 : 0,02, eingehalten wird ;

h) die Reaktionszeit 1 bis 2 Stunden bei Temperaturen zwischen 50 bis 100 °C beträgt ;

i) die Trocknung bei Temperaturen zwischen 80 bis 150 °C in Inertgasatmosphäre, vorzugsweise im Stickstoffstrom, erfolgt ;

k) die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt ; und

l) der Anteil des Polyharnstoffes im Flammschutzmittel 2 bis etwa 15 Masse% beträgt.

Schließlich betrifft die Erfindung auch die Verwendung des vorbeschriebenen Mittels zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

Das Aufbringen der Polyharnstoffe auf die Ammoniumpolyphosphat-Teilchen kann in nicht protonenaktiven, mit Wasser mischbaren Lösemitteln bzw. Lösemittelgemischen wie zum Beispiel aliphatischen, aromatischen und gemischtaliphatischen/aromatischen Ketonen unter Rühren der Ammoniumpolyphosphat/Polyisocyanat/Wasser-Suspension erfolgen, wobei die Polyadditionsreaktion unter Erwärmen durchgeführt wird.

Durch die erfindungsgemäße Umhüllung der Ammoniumpolyphosphat-Teilchen mit einem Polyharnstoff wird die Löslichkeit des Ammoniumpolyphosphates in Wasser erheblich herabgesetzt, was sich günstig auswirkt, z. B. beim Einsatz eines derartig vorbehandelten Ammoniumpolyphosphates als Flammschutzmittel in Polyurethanschäumen.

Die Polyharnstoffe zeichnen sich als Beschichtungsmaterial für Ammoniumpolyphosphat gegenüber den bekannten Umhüllungsharzen Phenol/Formaldehyd-Harz und Epoxidharz durch eine höhere Verringerung der Wasserlöslichkeit und gegenüber den Melamin/Formaldehyd-Harzen und den Phenol/Formaldehyd-Harzen dadurch aus, daß sie keinen Formaldehyd freisetzen können.

Die erfindungsgemäßen Mittel, deren Herstellung und Vorteile werden in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Polyisocyanate eingesetzt. Im einzelnen handelt es sich hierbei um folgende Produkte :

1. ®Exolit 422, Hoechst Aktiengesellschaft, Frankfurt/Main. Es handelt sich um ein feinkörniges, in Wasser schwer lösliches Ammoniumpolyphosphat, $(NH_4PO_3)_n$, wobei der Kondensationsgrad n ~ 700 ist.

2. ®Caradate 30, Deutsche Shell Chemie GmbH, Frankfurt/Main.

Es handelt sich um ein Gemisch verschiedener aromatischer Di- und Triisocyanate mit 4,4'

Diphenylmethandiisocyanat als Hauptkomponente. Das Produkt ist eine Flüssigkeit von tiefbrauner bis schwarzer Farbe. Der Isocyanatgehalt liegt bei 30,2 % NCO. Die Dichte (bei 23 °C) beträgt 1,22-1,24 g/ml, die Viskosität (bei 25 °C) 160-240 mPa · s.

3. ®Suprasec 1042, Deutsche ICI GmbH, Frankfurt/Main. Es handelt sich um eine dunkle, lösungsmittelfreie Flüssigkeit mit einer Dichte (bei 25 °C) von 1,24 g/ml und einer Viskosität (bei 25 °C) von 235 mPa · s. Der Isocyanatgehalt liegt bei 28,8-30,2 % NCO.

4. ®Desmodur T 80, Bayer Aktiengesellschaft, Leverkusen. Es handelt sich um ein Isomerengemisch eines aromatischen Diisocyanates mit 80 Masseprozent 2,4-Diisocyanatotoluol und 20 Masseprozent 2,6-Diisocyanatotoluol. Das Produkt ist eine farblose Flüssigkeit, der Isocyanatgehalt liegt bei ca. 48 %. Die Dichte (Bei 25 °C) beträgt ca. 1,2 g/ml.

5. Isophorondiisocyanat (3-Isocyanatomethyl-3,5,5-trimethylcyclohexylisocyanat), Chemische Werke Hüls Aktiengesellschaft, Marl.

Es handelt sich um ein flüssiges, farbloses Produkt mit einem Isocyanatgehalt von 37,5-37,8 % NCO. Die Dichte (bei 20 °C) beträgt 1,058-1,064 g/ml, dei Viskosität (bei 20 °C) 15 mPa · s.

Beispiel 1

In einer Rührapparatur aus Glas wurden in 1 000 ml Aceton (Wassergehalt : < 0,3 %) 250 g ®Exolit 422 suspendiert ; dann wurde eine Lösung von 15,0 g ®Caradate 30 in 100 ml Aceton eingetropft. Anschließend wurde die Suspension zum schwachen Sieden erhitzt und tropfenweise mit einer Lösung von 5 g Wasser in 50 ml Aceton versetzt. Nach einer Nachrührzeit von 2 Stunden wurde auf Raumtemperatur abgekühlt und filtriert. Der erhaltene Filterkuchen wurde bei 110 °C im Stickstoffstrom getrocknet.

Es wurden 253 g beschichtetes Ammoniumpolyphosphat erhalten ; der Polyharnstoffgehalt lag bei 4,5 Masse%.

Zur Bestimmung der wasserlöslichen Anteile wurden 10 g des hergestellten Produktes in 100 ml Wasser suspendiert und die Suspension 20 min bei 25 °C bzw. bei 60 °C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120 °C im Trockenschrank eingedampft. Aus der Menge des Verdampfungsrückstandes wurde der wasserlösliche Anteil berechnet. Das Ergebnis ist in Tabelle 1 dargestellt.

Beispiel 2

Es wurde analog Beispiel 1 verfahren, wobei jedoch eine Lösung von 30 g ®Caradate 30 in 100 ml Aceton eingesetzt wurde.

Es wurden 267 g beschichtetes Ammoniumpolyphosphat mit einem Polyharnstoffgehalt von 9,7 Masse% erhalten. Die ermittelten Werte für die wasserlöslichen Anteile sind in Tabelle 1 aufgeführt.

Beispiel 3

Es wurde analog Beispiel 1 verfahren, wobei jedoch eine Lösung von 15,0 g ®Suprasec 1042 in 100 ml Aceton eingesetzt wurde.

Es wurden 249 g beschichtetes Ammoniumpolyphosphat mit einem Polyharnstoffgehalt von 5,1 Masse% erhalten.

Die ermittelten Werte für die wasserlöslichen Anteile sind in Tabelle 1 aufgeführt.

Beispiel 4

Es wurde analog Beispiel 1 verfahren, wobei jedoch eine Lösung von 30 g ®Suprasec 1042 in 100 ml Aceton eingesetzt wurde.

Es wurden 264 g beschichtetes Ammoniumpolyphosphat mit einem Polyharnstoffgehalt von 10,2 Masse% erhalten. Die ermittelten Werte für die wasserlöslichen Anteile sind in Tabelle 1 aufgeführt.

Beispiel 5

In einer Rührapparatur aus Glas wurden 250 g ®Exolit 422 in 400 ml Aceton suspendiert ; dann wurden eine Lösung von 15 g ®Desmodur T 80 in 100 ml Aceton und eine Lösung von 5 g Wasser in 50 ml Aceton zugegeben. Anschließend wurde die Suspension zum schwachen Sieden erhitzt. Nach einer Nachrührzeit von 2 Stunden wurde auf Raumtemperatur abgekühlt und filtriert. Der erhaltene Filterkuchen wurde bei 100 °C im Stickstoffstrom getrocknet. Es wurden 257 g beschichtetes Ammoniumpolyphosphat mit einem Polyharnstoffanteil von 4,3 Masse% erhalten.

Die ermittelten Werte für die wasserlöslichen Anteile sind in Tabelle 2 aufgeführt.

Beispiel 6

Es wurde analog Beispiel 5 verfahren, wobei jedoch eine Lösung von 30 g ®Desmodur T 80 in 100 ml Aceton eingesetzt wurde. Es wurden 272 g beschichtetes Ammoniumpolyphosphat mit einem Polyharnstoffanteil von 7,5 Masse% erhalten. Die ermittelten Werte für die wasserlöslichen Anteile sind in Tabelle 2 aufgeführt.

Beispiel 7

Es wurde analog Beispiel 5 verfahren, wobei jedoch eine Lösung von 15 g Isophorondiisocyanat in 100 ml Aceton eingesetzt wurde. Es wurden 252 g beschichtetes Ammoniumpolyphosphat mit einem Polyharnstoffanteil von 5,2 Masse% erhalten.

Die ermittelten Werte für die wasserlöslichen Anteile sind in Tabelle 2 aufgeführt.

Beispiel 8

Es wurde analog Beispiel 5 verfahren, wobei jedoch eine Lösung von 30 g Isophorondiisocyanat in 100 ml Aceton eingesetzt wurde. Es wurden 266 g beschichtetes Ammoniumpolyphosphat mit einem Polyharnstoffanteil von 8,9 Masse% erhalten.

Die ermittelten Werte für die wasserlöslichen Anteile sind in Tabelle 2 aufgeführt.

Beispiel 9

Es wurde analog Beispiel 5 verfahren, wobei jedoch eine Lösung von 30 g mit Polycarbodiimid modifiziertes ®Caradate 30 [hergestellt durch Erhitzen von ®Caradate 30 mit 15 ppm eines Carbodiimidisierungskatalysators (z. B. 1-Methyl-1-oxo-phospholen, Hoechst Aktiengesellschaft, Frankfurt/Main) auf 110 °C bis zu einem Isocyanatgehalt von 27,5 %] in 100 ml Aceton eingesetzt wurde. Es wurden 272 g beschichtetes Ammoniumpolyphosphat mit einem Polyharnstoffanteil von 8,7 Masse% erhalten.

Die ermittelten Werte für die wasserlöslichen Anteile sind in Tabelle 3 aufgeführt.

Beispiel 10

Es wurde analog Beispiel 9 verfahren, wobei jedoch ein mit Polycarbodiimid modifiziertes ®Caradate 30 mit einem Isocyanatgehalt von 25,4 % eingesetzt wurde. Es wurden 266 g beschichtetes Ammoniumpolyphosphat mit einem Polyharnstoffanteil von 8,3 Masse% erhalten.

Die ermittelten Werte für die wasserlöslichen Anteile sind in Tabelle 3 aufgeführt.

Beispiel 11

Es wurde analog Beispiel 9 verfahren, wobei jedoch ein mit Polycarbodiimid modifiziertes ®Caradate 30 mit einem Isocyanatgehalt von 22,7 % eingesetzt wurde. Es wurden 269 g beschichtetes Ammoniumpolyphosphat mit einem Polyharnstoffanteil von 8,8 Masse% erhalten.

Die ermittelten Werte für die wasserlöslichen Anteile sind in Tabelle 3 aufgeführt.

Beispiel 12

Es wurde analog Beispiel 9 verfahren, wobei jedoch ein mit Polycarbodiimid modifiziertes ®Caradate 30 mit einem Isocyanatgehalt von 19,8 % eingesetzt wurde. Es wurden 279 g beschichtetes Ammoniumpolyphosphat mit einem Polyharnstoffanteil von 9,1 Masse% erhalten.

Die ermittelten Werte für die wasserlöslichen Anteile sind in Tabelle 3 aufgeführt.

(Siehe Tabellen Seite 6 ff.)

Tabelle 1

| Produkt | Gehalt an Polyharnstoff (%) | Wasserlösliche Anteile (%) | | | |
|---|---|---|---|---|---|
| | | bei 25°C | Veränderung (%) | bei 60°C | Veränderung (%) |
| Beispiel 1 | 4,5 | 3,6 | -56 | 14,3 | -77 |
| Beispiel 2 | 9,7 | 2,1 | -74 | 8,9 | -86 |
| Beispiel 3 | 5,1 | 3,1 | -62 | 12.7 | -80 |
| Beispiel 4 | 10,2 | 1,9 | -77 | 7,4 | -88 |
| ® Exolit 422 1) | - | 8,2 | - | 62 | - |

1) Zum Vergleich wurden die Werte für die unbeschichtete Handelsware (®Exolit 422, Hoechst Aktiengesellschaft, Frankfurt/Main) aufgeführt.

Tabelle 2

| Produkt | Gehalt an Polyharnstoff (%) | Wasserlösliche Anteile (%) | | | |
|---|---|---|---|---|---|
| | | bei 25°C | Veränderung (%) | bei 60°C | Veränderung (%) |
| Beispiel 5 | 4,3 | 3,9 | -52 | 15,6 | -75 |
| Beispiel 6 | 7,5 | 2,7 | -67 | 10,1 | -84 |
| Beispiel 7 | 5,2 | 2,1 | -74 | 8,5 | -86 |
| Beispiel 8 | 8,9 | 1,3 | -84 | 3,6 | -94 |
| ® Exolit 422 1) | - | 8,2 | - | 62 | - |

1) Zum Vergleich wurden die Werte für die unbeschichtete Handelsware (®Exolit 422, Hoechst Aktiengesellschaft, Frankfurt/Main) aufgeführt.

Tabelle 3

| Produkt | Gehalt an Polyharnstoff (%) | Carbodiimid-Gehalt im Polyharnstoff (%) | Wasserlösliche Anteile (%) bei 25°C | Veränderung (%) | bei 60°C | Veränderung (%) |
|---|---|---|---|---|---|---|
| Beispiel 9 | 8,7 | 8,9 | 1,9 | -77 | 7,5 | -88 |
| Beispiel 10 | 8,3 | 15,9 | 1,6 | -80 | 6,3 | -90 |
| Beispiel 11 | 8,8 | 24,8 | 1,4 | -83 | 3,6 | -94 |
| Beispiel 12 | 9,1 | 34,4 | 0,8 | -90 | 1,9 | -97 |
| ® Exolit 422 1) | - | - | 8,2 | - | 62 | - |

1) Zum Vergleich wurden die Werte für die unbeschichtete Handelsware (®Exolit 422, Hoechst Aktiengesellschaft, Frankfurt/Main) aufgeführt.

Die Werte aus den Tabellen 1-3 lassen erkennen, daß mit Hilfe der erfindungsgemäßen Modifizierungsmittel der Gehalt an wasserlöslichen Anteilen erheblich gesenkt werden kann (bei 25 °C um bis zu 90 %, bei 60 °C um bis zu 97 %).

**Patentansprüche**

1. Flammschutzmittel auf der Basis von freifließendem, pulverförmigen Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, dadurch gekennzeichnet, daß es aus

a) etwa 75 bis 99,5 Masse% Ammoniumpolyphosphat und

b) etwa 0,5 bis 25 Masse% eines Reaktionsproduktes aus einem Polyisocyanat und Wasser, wobei der gebildete Polyharnstoff die einzelnen Ammoniumpolyphosphatteilchen umhüllt,

besteht.

2. Mittel nach Anspruch 1, dadurch gekennzeichnet, daß es eine mittlere Teilchengröße von etwa 0,01 bis 0,1 mm besitzt.

3. Mittel nach Anspruch 1 oder 2, dadurch gekennzeichnet, daß n eine ganze Zahl mit einem Durchschnittswert von 450 bis 800 ist.

4. Mittel nach Anspruch 1-3, dadurch gekennzeichnet, daß der Anteil des Polyharnstoffes 2 bis etwa 15 Masse% beträgt.

5. Verfahren zur Herstellung eines Flammschutzmittels nach einem der vorhergehenden Ansprüche, dadurch gekennzeichnet, daß man eine Suspension, welche aus einem Verdünnungsmittel und aus freifließendem, pulverförmigen Ammoniumpolyphosphat der allgemeinen Formel

$$H_{(n-m))+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus Wasser besteht, während 0,5 bis 5 Stunden unter Rühren auf Temperaturen zwischen 30 bis 200 °C hält und anschließend abkühlt, filtriert und das nunmehr mit einem Polyharnstoff mikroverkapselte Ammoniumpolyphosphat trocknet.

6. Verfahren nach Anspruch 6, dadurch gekennzeichnet, daß man die Suspension aus Verdünnungsmittel und Ammoniumpolyphosphat vorlegt und dieser Suspension Lösungen des Polyisocyanates und anschließend des Wassers in dem Verdünnungsmittel langsam zugibt.

7. Verfahren nach einem der Ansprüche 6-7, dadurch gekennzeichnet, daß in der allgemeinen Formel des Ammoniumpolyphosphates n eine ganze Zahl mit einem Durchschnittswert von 450 bis 800 ist.

8. Verfahren nach einem der Ansprüche 6-8, dadurch gekennzeichnet, daß als Verdünnungsmittel nicht protonenaktive, mit Wasser mischbare Lösemittel bzw. Lösemittelgemische wie zum Beispiel aliphatische, aromatische und gemischtaliphatische/aromatische Ketone, vorzugsweise Aceton, eingesetzt werden.

9. Verfahren nach einem der Ansprüche 6-9, dadurch gekennzeichnet, daß als Polyisocyanat handelsübliche aromatische oder aliphatische Di- und Polyisocyanate sowie Prepolymere auf Basis von Polyurethan- oder Polycarbodiimid- oder Polyisocyanurat-modifizierten Polyisocyanaten eingesetzt werden.

10. Verfahren nach Anspruch 10, dadurch gekennzeichnet, daß als Polyisocyanat durch teilweise Carbodiimidisierung erhaltene Polycarbodiimid-modifizierte Polyisocyanate, z. B. Polycarbodiimid-modifiziertes 4,4'-Diphenylmethandiisocyanat, eingesetzt werden.

11. Verfahren nach einem der Ansprüche 6-12, dadurch gekennzeichnet, daß in der Suspension ein Verhältnis von Ammoniumpolyphosphat : Verdünnungsmittel : Polyisocyanate : Wasser wie 1 : 1,5-2,5 : 0,05-0,25 : 0,005-0,1, vorzugsweise wie 1 : 2 : 0,1 : 0,02, eingehalten wird.

12. Verfahren nach einem der Ansprüche 6-13, dadurch gekennzeichnet daß die Reaktionszeit 1 bis 2 Stunden bei Temperaturen zwischen 50 bis 100 °C beträgt.

13. Verfahren nach einem der Ansprüche 6-14, dadurch gekennzeichnet, daß die Trocknung bei Temperaturen zwischen 80 bis 150 °C in Inertgasatmosphäre, vorzugsweise im Stickstoffstrom, erfolgt.

14. Verfahren nach einem der Ansprüche 6-15, dadurch gekennzeichnet, daß die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt.

15. Verfahren nach einem der Ansprüche 6-16, dadurch gekennzeichnet, daß der Anteil des Polyharnstoffes im Flammschutzmittel 2 bis etwa 15 Masse% beträgt.

16. Verwendung des Mittels nach Anspruch 1-5 und hergestellt nach dem Verfahren gemäß einem der Ansprüche 6-17 zur flammwidrigen Einstellung von Polyurethanen bzw. Polyurethanschäumen.

wobei der Gehalt des Mittels im Polyurethanschaum etwa 5 bis 25 Masse%, bezogen auf die Menge der Polyolkomponente des Polyurethans, beträgt.

## Claims

1. Flame retardant agent based on free flowing pulverulent ammonium polyphosphate of the general formula

$$H_{(n-m)+2}(NH_4)_mP_nO_{3n+1}$$

in which n stands for a whole number having an average value of about 20 to 800 and the ratio m/n is about 1, consisting of

a) about 75 to 99.5 wgt.% ammonium polyphosphate and

b) about 0.5 to 25 wgt.% of a reaction product of a polyisocyanate and water, the polyurea formed encapsulating the individual ammonium polyphosphate particles.

2. Agent as claimed in claim 1 presenting a mean particle size of about 0.01 to 0.1 mm.

3. Agent as claimed in claim 1 or 2, wherein n stands for a whole number having an average value of 450 to 800.

4. Agent as claimed in any of claims 1-3, containing the polyurea in a proportion of 2 to about 15 wgt.%.

5. Process for making a flame-retardant agent as claimed in any of the preceding claims which comprises : maintaining a suspension consisting of a diluent and free flowing pulverulent ammonium polyphosphate of the general formula

$$H_{(n-m)+2}(NH_4)_mP_nO_{3n+1}$$

in which n stands for a whole number having an average value of about 20 to 800 and the ratio m/n is about 1, as well as of a polyisocyanate and water over a period of 0.5 to 5 hours, while stirring, at a temperature between 30 and 200 °C and thereafter cooling and filtering it and drying the ammonium polyphosphate now microencapsulated in a polyurea.

6. Process as claimed in claim 5, wherein the suspension of diluent and ammonium polyphosphate is gradually admixed with a solution of the polyisocyanate and then of the water in the diluent.

7. Process as claimed in claim 5 or 6, wherein in the general formula of the ammonium polyphosphate, n stands for a whole number having an average value of 450 to 800.

8. Process as claimed in any of claims 5-7, wherein the diluent is a proton-inactive solvent miscible with water, or solvent mixture, e. g. an aliphatic, aromatic or mixed aliphatic/aromatic ketone, preferably acetone.

9. Process as claimed in any of claims 5-8, wherein the polyisocyanate is a commercially available aromatic or aliphatic di- or polyisocyanate or a prepolymer based on a polyisocyanate modified with a polyurethane, polycarbodiimide or polyisocyanurate.

10. Process as claimed in claim 9, wherein the polyisocyanate is a polycarbodiimide-modified polyisocyanate obtained by partial carbodiimidisation, e. g. 4,4'-diphenylmethanediisocyanate modified with a polycarbodiimide.

11. Process as claimed in any of claims 5-10, wherein an ammonium polyphosphate/diluent/polyisocyanate/water-ratio of 1 : 1.5-2.5 : 0.05-0.25 : 0.005-0.1, preferably 1 : 2 : 0.1 : 0.02 is maintained in the suspension.

12. Process as claimed in any of claims 5-11, wherein the reaction period is 1-2 hours at temperatures between 50 and 100 °C.

13. Process as claimed in any of claims 5-12, wherein the drying is effected at temperatures between 80 and 150 °C under inert gas, preferably in a stream of nitrogen.

14. Process as claimed in any of claims 5-13, wherein the mean particle size reached for the microencapsulated ammonium polyphosphate as the flame-retardant agent is between 0.01 and 0.1 mm, preferably between 0.03 and 0.06 mm.

15. Process as claimed in any of claims 5-14, wherein the flame-retardant agent contains the polyurea in a proportion of 2 to about 15 wgt.%.

16. Use of the agent as claimed in any of claims 1-4, and prepared by the process as claimed in any of claims 5-15 for conferring flame-retardant properties upon polyurethanes or polyurethane foams, the polyurethane foam containing the agent in a proportion of about 5-25 wgt.%, based on the quantity of the polyol component of the polyurethane.

## Revendications

1. Agent ignifugeant à base de polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, caractérisé en ce qu'il est constitué par

a) environ 75 à 99,5 % en poids de polyphosphate d'ammonium et

b) environ 0,5 à 25 % en poids d'un produit de réaction d'un polyisocyanate et d'eau, la polyurée encapsulant les particules individuelles de polyphosphate d'ammonium.

2. Agent selon la revendication 1, caractérisé en ce qu'il présente une granulométrie moyenne d'environ 0,01 à 0,1 mm.

3. Agent selon la revendication 1 ou 2, caractérisé en ce que n est un nombre entier d'une valeur moyenne de 450 à 800.

4. Agent selon l'une des revendications 1 à 3, caractérisé en ce que la fraction de polyurée est de 2 à environ 15 % en poids.

5. Procédé de préparation d'un agent ignifugeant selon l'une des revendications précédentes, caractérisé en ce que l'on maintient une suspension constituée par un diluant et un polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, ainsi que par un polyisocyanate et l'eau pendant 0,5 à 5 h sous agitation à des températures comprises entre 30 et 200 °C, ensuite on la refroidit, on filtre et on sèche le polyphosphate d'ammonium dès lors micro-encapsulé dans une polyurée.

6. Procédé selon la revendication 5, caractérisé en ce que l'on charge initialement la suspension de diluant et de polyphosphate d'ammonium et on ajoute lentement à cette suspension des solutions du polyisocyanate et ensuite de l'eau dans le diluant.

7. Procédé selon la revendication 5 ou 6, caractérisé en ce que, dans la formule générale du polyphosphate d'ammonium, n est un nombre entier d'une valeur moyenne de 450 à 800.

8. Procédé selon l'une des revendications 5 à 7, caractérisé en ce qu'on utilise comme diluants, des solvants non fixateurs de protons, miscibles à l'eau ou à des mélanges de solvants, par exemple des cétones aliphatiques, aromatiques et mixtes aliphatiques/aromatiques, de préférence l'acétone.

9. Procédé selon l'une des revendications 5 à 8, caractérisé en ce qu'on utilise comme polyisocyanates des di- et polyisocyanates aromatiques ou aliphatiques du commerce ainsi que des prépolymères à base de polyisocyanates modifiés par des polyuréthannes, ou des polycarbodiimides ou des polyisocyanurates.

10. Procédé selon l'une des revendications 5 à 9, caractérisé en ce qu'on utilise comme polyisocyanates des polyisocyanates modifiés par des polycarbodiimides, obtenus par carbodiimidation partielle, par exemple le diisocyanato-4,4'-diphénylméthane modifié par un polycarbodiimide.

11. Procédé selon l'une des revendications 5 à 10, caractérisé en ce qu'on maintient dans la suspension une proportion polyphosphate d'ammonium/diluant/polyisocyanate/eau de 1 : 1,5-2,5 : 0,05-0,25 : 0,005-0,1, de préférence 1 : 2 : 0,1 : 0,02.

12. Procédé selon l'une des revendications 5 à 11, caractérisé en ce que la durée de réaction est de 1 à 2 h à des températures comprises entre 50 et 100 °C.

13. Procédé selon l'une des revendications 5 à 12, caractérisé en ce que l'on effectue le séchage à des températures de 80 à 150 °C en atmosphère de gaz inerte, de préférence dans un courant d'azote.

14. Procédé selon l'une des revendications 5 à 13, caractérisé en ce que la granulométrie moyenne du polyphosphate d'ammonium micro-encapsulé comme agent ignifugeant est comprise entre 0,01 et 0,1 mm, de préférence entre 0,03 et 0,06 mm.

15. Procédé selon l'une des revendications 5 à 14, caractérisé en ce que la fraction de polyurée dans l'agent ignifugeant est de 2 à environ 15 % en poids.

16. Utilisation de l'agent selon l'une des revendications 1 à 4, et préparé par le procédé selon l'une des revendications 5 à 15 pour l'ignifugation de polyuréthannes ou de mousses de polyuréthannes, la teneur en agent dans la mousse de polyuréthanne étant d'environ 5 à 25 % en poids, par rapport à la quantité du composant polyol du polyuréthanne.